**Europäisches Patentamt**

**European Patent Office**

**Office européen des brevets**

(11) Publication number: **0 155 724**
**B1**

## (12) EUROPEAN PATENT SPECIFICATION

(45) Date of publication of patent specification: **06.12.89**

(21) Application number: **85200261.7**

(22) Date of filing: **26.02.85**

(51) Int. Cl.⁴: **A 01 D 69/12**

(54) **Method and apparatus for checking lubrication volume in a disc cutterbar.**

(30) Priority: **02.03.84 US 585726**

(43) Date of publication of application:
**25.09.85 Bulletin 85/39**

(45) Publication of the grant of the patent:
**06.12.89 Bulletin 89/49**

(84) Designated Contracting States:
**DE FR GB**

(56) References cited:
**DE-A-1 582 344**
**FR-A-2 326 857**

**Operator's Manual for the Sperry New Holland Disc Mower Model 438 (Edition 55915-6000-7646)**

(73) Proprietor: **FORD NEW HOLLAND, INC. (a Delaware corp.)**
**500 Diller Avenue**
**New Holland Pennsylvania 17557 (US)**

(72) Inventor: **McLean, Kenneth W.**
**344 East Conestoga Street**
**New Holland, P.A. 17557 (US)**

(74) Representative: **Vandenbroucke, Alberic T.J.**
**FORD NEW HOLLAND N.V. Leon Claeysstraat 3A**
**B-8210 Zedelgem (BE)**

EP 0 155 724 B1

## Description

The present invention relates generally to hay harvesting machines of the type comprising a disc cutterbar and such as shown in DE-A-1.582.344 and FR-A-2.326.857. One such type of harvesting machine is formed by a so-called disc mower-conditioner. More particularly, the invention is concerned with an improved system for determining the proper amount of lubricant to be placed within the rotary cutterbar of such a harvesting machine.

Mower-conditioners have been provided for the harvesting of hay for a number of years. A mower-conditioner severs standing crop material and conveys the severed crop material rearwardly into a conditioning mechanism. A disc mower-conditioner is provided with a disc cutterbar having a number of transversely spaced rotatable cutter members operable to sever standing crop material by an impact action. A conditioning mechanism mounted rearwardly of the disc cutterbar is operable to receive severed crop material from the disc cutterbar for conditioning.

A disc cutterbar includes a generally hollow support bar in which is housed a drive transmission mechanism, generally in the form of a series of intermeshing gears. The disc cutters are rotatably supported on the support bar and connected to a corresponding gear to effect rotation thereof when the drive transmission mechanism is rotatably driven by a primary drive mechanism. For the proper operation of the drive transmission gears, a correct amount of lubricant must be present within the support bar. Typically, the support bar is considerably wider and longer than it is thick, making the correct depth of lubricant a very critical value since too much lubricant will cause overheating and too little lubricant will not provide adequate lubrication for the drive transmission gears. Further complicating the determination of the proper volume of lubricant within the cutterbar is the difficulty in determining when the cutterbar is properly leveled in both the side-to-side direction and the front to rear direction. Furthermore, because of the weight of the cutterbar and its length, the support bars are prone to sagging near the center resulting in the lubricant being non-uniformly distributed within the support bar even when the cutterbar is properly leveled. Accordingly, not only is leveling the support bar in two directions inconvenient, determination of the volume of lubricant in the support bar can also be unreliable as it is dependent upon the condition of the cutterbar being serviced.

In the art of disc mowers it is known to position the cutterbar in a vertical position on one of its fore-and-aft edges for accurately and reliably checking the lubricant level in the disc cutterbar. This method and the apparatus therefore are disclosed a.o. in the Operator's Manual for the Sperry New Holland Disc Mower model 438, page 7 (edition 552915-6000-7646). This method is unpractical for a disc cutterbar integrated in e.g. a mower-conditioner.

It is an object of this invention to provide a harvesting machine of the type comprising a disc cutterbar and which is arranged to facilitate an accurate and reliable checking of the lubricant level in the disc cutterbar.

It is also an object of this invention to provide a more reliable and accurate method for determining the proper volume of lubricant in the disc cutterbar of such a harvesting machine.

According to the instant invention, a harvesting machine is provided which comprises rotary cutting means and lift means operably associated with the rotary cutting means for selectively moving said rotary cutting means between an operative position and a transport position. The rotary cutting means of said harvesting machine comprise:

a generally hollow support bar having a fill hole positioned at a predetermined distance from a first transverse end thereof for introduction of lubricant therein,

drive transmission members housed within the support bar, and

a plurality of transversely spaced disc cutter members rotatably mounted on the support bar and operably connected to the drive transmission members therein to effect a rotation of said cutter members to sever standing crop material by impact action.

The invention is characterized in that tilt means operably associated with the support bar, are selectively positionable in an inoperative position and a tilt position; the arrangement being such that, when the harvesting machine is positioned over a substantially level area of ground, the lift means are in the condition normally corresponding to the operative position of the rotary cutting means and the tilt means are held in the tilt position, the second transverse end of the support bar is positioned higher than the first transverse end thereof whereby said support bar is positioned at a predetermined acute angle inclined to the horizontal such that the supply of lubricant therein is caused to flow to the lower transverse end and said fill hole is positioned such that the fluid level of the lubricant is at the fill hole when the support bar is positioned at said predetermined acute angle and when the proper volume of lubricant is present within the support bar.

The harvesting machine further also may comprise:

a mobile frame,

crop processing means for processing crop material fed thereto (e.g. when the harvesting machine is a disc mower-conditioner, the crop processing means are formed by conditioner means), and

a header floatingly supported from the frame for generally vertical movement relative thereto; the header having first and second transversely spaced apart sidewalls, the rotary cutting means being mounted on the header forwardly of the crop processing means, and the lift means operably interconnecting the frame and the header for

selectively effecting a generally vertical movement of the header relative to the frame.

The tilt means preferably are operable to tilt the header with the rotary cutting means thereon at the predetermined acute angle inclined to the horizontal. The rotary cutting means may be provided with ground engaging means proximate to each transverse end of the support bar and the tilt means may be operably associated with the second side wall of the header and be positionable in two positions. In a first, retracted position of the tilt means, the ground engaging means at both transverse ends of the support bar are free to engage the ground and in a second, tilt position, the tilt means engage the ground preventing the ground engaging means proximate to said tilt means from engaging the ground.

Preferably, the tilt means are in the form of a jackstand adjustably mounted on the header proximate to the second transverse end of the support bar and selectively positionable in a retracted position and a tilt position to elevate the second header side wall. It is a feature of this invention that the jackstand can be operated in conjunction with the header lift mechanism to facilitate the checking of the lubricant volume within the disc cutterbar.

According to another aspect of the invention, a method is provided for filling the proper volume of lubricant in a harvesting machine having a rotary cutting mechanism including a hollow support bar housing drive transmission means and a desired volume of fluid lubricant therewithin; the support bar having a fill hole for the introduction of lubricant therein. The method is characterized in the steps of:

raising the rotary cutting mechanism from an operative position to an elevated position;

moving a tilting mechanism disposed generally at or adjacent one transverse end of the rotary cutting mechanism from an inoperative position to an operative tilt position for therewith restricting subsequent lowering movement of said one transverse end of the rotary cutting mechanism;

lowering the rotary cutting mechanism until it is supported at said one transverse end thereof by the tilting mechanism on the one hand and until the opposite transverse end thereof has returned substantially to the level of said operative position of the rotary cutting mechanism on the other hand whereby said rotary cutting mechanism assumes a tilted position at a predetermined acute angle relative to the horizontal; the position of the fill hole being such that the free volume of the support bar below the fill hole when the rotary cutting mechanism is at said predetermined acute angle, is substantially equal to the desired volume of lubricant,

adjusting the amount of lubricant within the support bar until the level thereof is at the fill hole, and

then returning the rotary cutting mechanism from the tilted position to the operative position.

It is an advantage of the invention that, on the one hand, irregularities in the structure of the cutterbar will have minimal effects on the checking of the lubricant volume within the cutterbar and, on the other hand, the proper lubricant volume for the disc cutterbar can be obtained quickly and easily.

It is also a feature of this invention that the cutterbar is positioned at the necessary acute angle when one end of the cutterbar is supported on the ground and the other end of the cutterbar is supported by the jackstand resting upon the ground at substantially the same level as the lower end of the cutterbar.

The advantages of this invention will become apparent upon consideration of the following detailed disclosure of the invention, especially when taken in conjunction with the accompanying drawings wherein:

Fig. 1 is a top plan view of a disc mower-conditioner incorporating the principles of the instant invention and with a portion of the draft member being broken away;

Fig. 2 is a side elevational view of a disc mower-conditioner seen in Fig. 1 with portions being broken away to better show the invention;

Fig. 3 is an enlarged cross-sectional view taken along the lines 3-3 of Fig. 2, but with the machine elements being shown in the lubricant checking mode and with selective structures being broken away to better show the invention; the thickness of the disc cutterbar support bar being somewhat exaggerated to better depict the invention and the fill plugs being shown exploded upwardly from their respective holes; and

Figs. 4, 5 and 6 are schematic front elevational views of the disc mower-conditioner seen in Fig. 1 for sequentially depicting the steps for checking the lubricant volume in the disc cutterbar, the fill plugs in Fig. 6 being shown exploded upwardly from their respective holes.

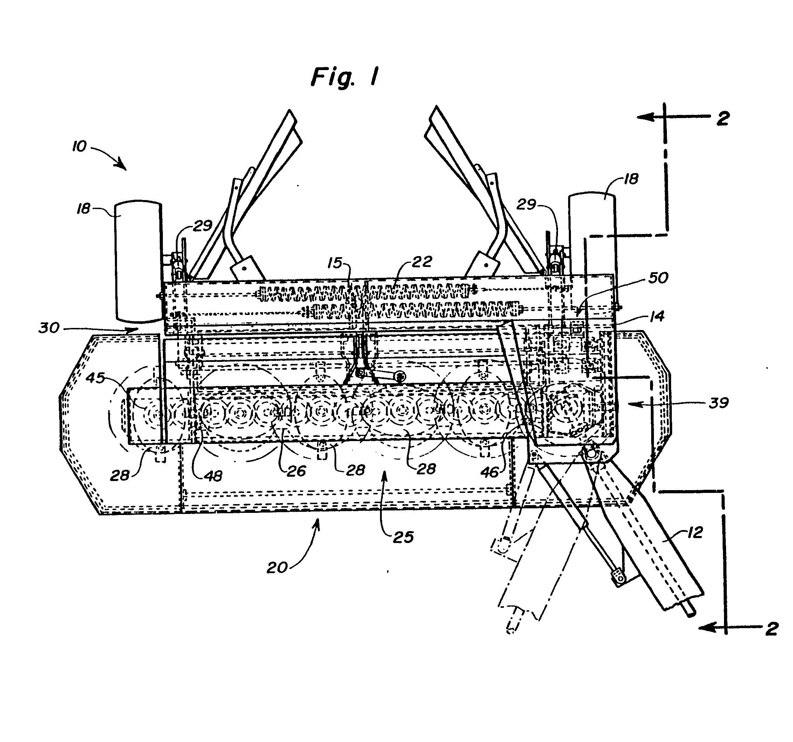

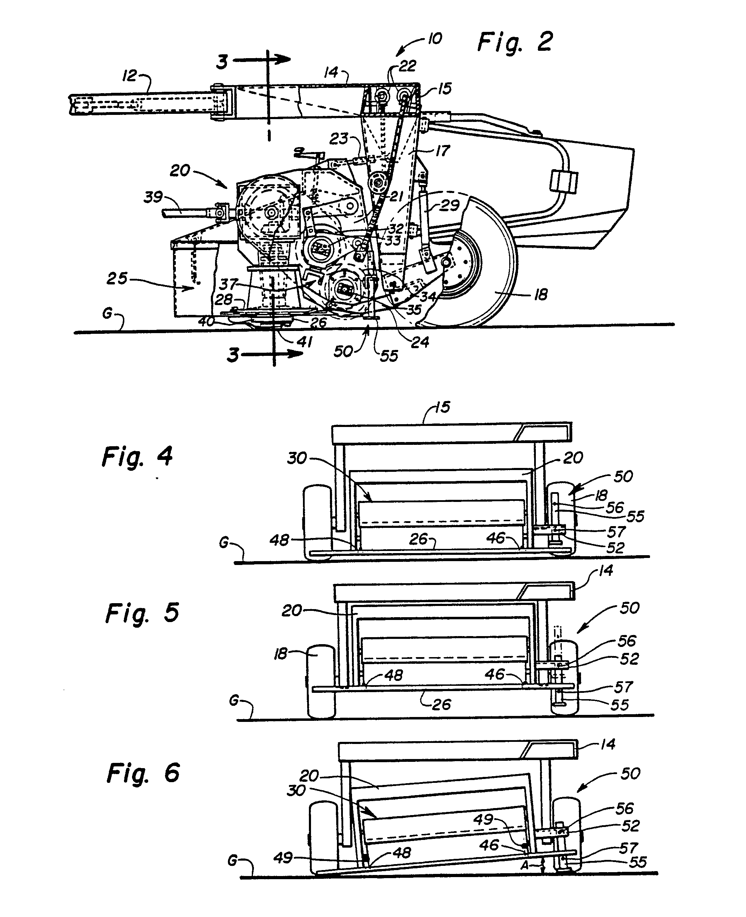

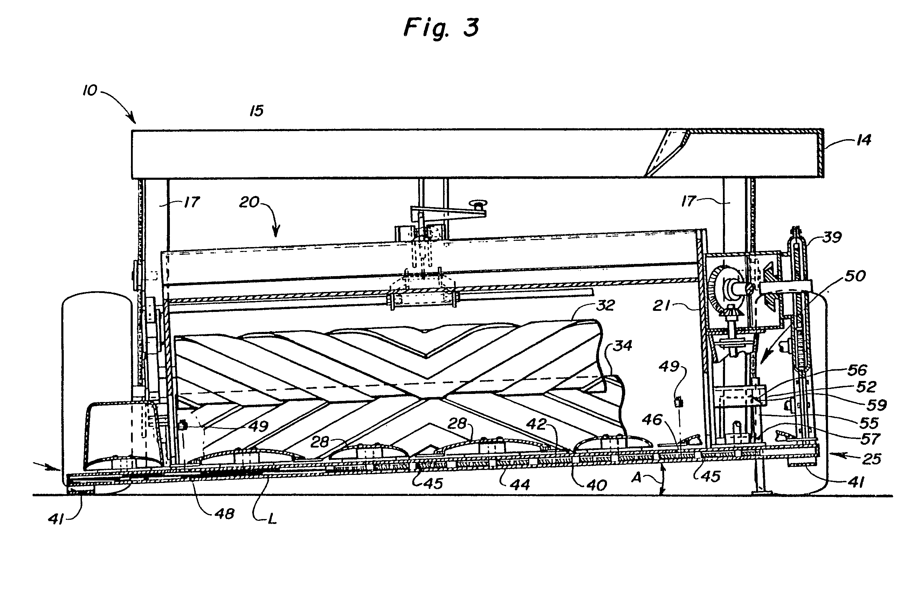

Referring now to the drawings, and particularly to Fig. 1, a top plan view of a hay harvesting machine, commonly referred to as a disc mower-conditioner, can be seen. Any left and right references are used as a matter of convenience and are determined by standing at the rear of the mower-conditioner and facing in the direction of travel. The mower-conditioner 10 is shown in the form of a pull-type machine having a draft member 12 pivotally connected to the frame 14 of the machine 10. The frame 14 includes a main transverse support beam 15 to which are connected downwardly depending legs 17 mounting wheels 18 for mobilely supporting the machine 10 over the ground G, as best seen in Fig. 2.

Referring to Figs. 1 and 2, the mower-conditioner 10 includes a crop harvesting header 20 floatingly supported for movement over the ground G relative to the frame 14 by the counterbalancing mechanism 22 and upper and lower links 23, 24 interconnecting the header 20 and the frame 14. The header 20 is provided with a crop cutting mechanism 25, seen in the form of a disc cutterbar 26, such as a Kuhn three meter, six rotor rotary cutterbar, having a plurality of transversely spaced disc cutter members 28 operable to sever standing crop material by an impact action. A conditioning mechanism 30 is mounted on the header 20 rearwardly of the cutting mechanism 25 to receive and condition crop material severed by the cutterbar 26. The header 20 can be raised relative to the frame 14 in a conventional manner by a header lift mechanism 29, shown in the form of a hydraulic cylinder interconnecting each lower link 24 and the corresponding leg 17.

The conditioning mechanism 30 includes a pair of cooperable, generally vertically spaced transverse conditioning rolls 32, 34 operable to condition severed crop material passing therebetween. Each roll 32, 34 is rotatably mounted within the header 20 such that the axis of rotation 33 of the upper conditioning roll 32 is spaced slightly forwardly of the axis of rotation 35 of the lower conditioning roll 34, so that the nip 37 formed therebetween is facing slightly downwardly toward the disc cutterbar 26. The preferred embodiment of the conditioning roll construction shown in Figs. 1 and 2 is of the intermeshing lug design. A drive mechanism 39 provides a source of rotational power to both the cutting mechanism 25 and the conditioning mechanism 30 in a conventional manner.

Referring now to Figs. 1, 2 and 3, the apparatus for determining the proper lubricant volume within the disc cutterbar 26 can be seen. The disc cutterbar 26 includes a transverse support bar 40 having vertically spaced upper and lower surfaces 42, 44, respectively, and defining a generally hollow beam for the housing of drive transmission gears 45 within the support bar 40. The cutter members 28 are rotatably mounted on the upper surface 42 of the support bar 40 and are connected to a corresponding drive transmission gear 45 to effect rotation thereof. The upper surface 42 is also provided with a pair of fill holes 46, 48 spaced inwardly of the corresponding ends of the support bar 40. Each fill hole 46, 48 is provided with a removable plug 49 to permit access to the interior of the support bar 40. Ground engaging shoes 41 are affixed to the lower surface 44 of the support bar 40 to elevate the support bar 40 above the ground G.

A header tilt mechanism 50 is affixed to the left side sheet 21 of the header 20 to effect a tilting of the header 20 at a predetermined angle A relative to horizontal. The header tilt mechanism includes a bracket 52 affixed to the side sheet 21 for slidably receiving a jackstand 55 having a pair of openings 56, 57 extending therethrough. The position of the jackstand 55 relative to the bracket 52 can be secured through the use of a fastening member 59 extending through a corresponding hole in the bracket 52 and either the tilt opening 56 or the retracted opening 57, as will be described in further detail below.

Referring now to Figs. 3-6, it can be seen that the jackstand 55 can be utilized to tilt the cutterbar 26 at the angle A to drain the fluid lubricant L within the support bar 40 to the lower end of the support bar 40. If the right fill hole 48 is positioned in the upper surface 42 such that the free volume of the interior of the support bar 40 lying vertically beneath this right fill hole 48 when the support bar is inclined at the angle A, is equal to the total recommended volume of fluid lubricant L for proper operation of the drive transmission gears within the support bar 40, the correct volume of lubricant L can quickly and easily be attained by filling the support bar 40 with lubricant L through the right fill hole 48 until the level of the lubricant L is at the fill hole 48.

In operation, the header 20 can be moved from the operative position seen in Fig. 4 to a raised position seen in Fig. 5 by manipulation of the header lift mechanism 29. By removing the fastening member 59 from the retracted opening 57 of the jackstand 55, the jackstand can be moved from the retracted position seen in phantom in Fig. 5 to the tilting position shown in solid lines in Fig. 5. A reengagement of the fastening member 59 through the tilt opening 56 will lock the position of the jackstand 55 relative to the bracket 52 and permit the operator to affect a tilting of the cutterbar 26. By lowering the header 20 by appropriate manipulation of the header lift mechanism, the header 20 will assume the tilted position seen in Fig. 6 with the right ground engaging shoe 41 resting on the ground G and the left end of the header 20 being supported on the jackstand 55, such that the cutterbar 26 is tilted at the angle A relative to horizontal, when the machine 10 is situated on substantially level ground G.

As is noted above, when the support bar 40 has the proper amount of fluid lubricant L, the level of the lubricant L is at the right fill hole 48. The left fill hole 46 is utilized when adding lubricant through the right fill hole 48 to facilitate the removal of air from within the support bar 40. Once it has been determined that the proper volume of lubricant L is present within the support bar 40, the procedure noted above is reversed. With the header 20 raised by the header lift mechanism 29, the jackstand 55 can be returned to its retracted position by a repositioning of the fastening member 59 through the retracted opening 57 in the jackstand 55 and the corresponding opening in the bracket 52. A subsequent manipulation of the header lift mechanism 29 can return the header to the operative position seen in Fig. 4. Although the preferred embodiment for the instant invention is shown with respect to a disc mower-conditioner, one skilled in the art will readily realize that the disclosed method and apparatus for checking the volume of lubricant within a disc cutterbar can be equally applicable to a conventional rotary mower. It also will be understood that the invention is equally well applicable on still other sorts of harvesting machines of the type comprising a disc type cutterbar, such as e.g. a forage harvester having a disc type direct cut attachment. In such a harvesting machine the conditioner means, of course, are replaced by a cutterhead and associated shearbar.

One skilled in the art also will readily realize that an alternative embodiment of the above described invention would be to provide a linkage selectively attachable between the elevatable end of the header and the frame 14 of the machine such that as the header 20 is lowered, one end would be positioned higher than the other end with the support bar 40 being inclined at angle A to permit the lubricant to flow down to the lower end without one end of the header 20 resting on the ground G.

## Claims

1. A harvesting machine (10) with rotary cutting means (25) and a lift means (29) operably associated with the rotary cutting means (25) for selectively moving said rotary cutting means (25) between an operative position and a transport position; the rotary cutting means (25) comprising:

a generally hollow support bar (40) having a fill hole (48) positioned at a predetermined distance from a first transverse end thereof for the introduction of lubricant (L) therein,

drive transmission members (45) housed within the support bar (40), and

a plurality of transversely spaced disc cutter members (28) rotatably mounted on the support bar (40) and operably connected to the drive transmission members (45) therein to effect a rotation of said cutter members (28) to sever standing crop material by impact action,

characterized in that:

tilt means (50) operably associated with the support bar (40) are selectively positionable in an inoperative position and a tilt position; the arrangement being such that, when the harvesting machine (10) is positioned over a substantially level area of ground (G), the lift means (29) are in the condition normally corresponding to the operative position of the rotary cutting means (25) and the tilt means (50) are held in the tilt position, the second transverse end of the support bar (40) is positioned higher than the first transverse end thereof whereby said support bar (40) is positioned at a predetermined acute angle (A) inclined to the horizontal such that the supply of lubricant (L) therein is caused to flow to the lower transverse end and said fill hole (48) is positioned such that the fluid level of the lubricant (L) is at the fill hole (48) when the support bar (40) is positioned at said predetermined acute angle (A) and when the proper volume of lubricant (L) is present within the support bar (40).

2. A harvesting machine according to claim 1 characterized in that the support bar (40) is provided with ground engaging means (41) proximate to the first end thereof for resting upon the ground (G) when the support bar (40) is positioned at said predetermined acute angle (A) relative to the horizontal.

3. A harvesting machine according to claim 1 or 2 characterized in that the support bar (40) includes an air hole (46) positioned between the fill hole (48) and the second transverse end of the support bar (40); the fill hole (48) being used for the introduction of lubricant (L) into the support bar (40) and the air hole (46) being used to permit air to escape from the support bar (40) when lubricant (L) is being introduced through the fill hole (48).

4. A harvesting machine according to any of the preceding claims and also comprising:

a mobile frame (14),

crop processing means (30) for processing crop material fed thereto, and

a header (20) floatingly supported from the frame (14) for generally vertical movement relative thereto; the header (20) having first and second transversely spaced apart sidewalls (21), the rotary cutting means (25) being mounted on the header (20) forwardly of the crop processing means (30), and the lift means (29) operably interconnecting the frame (14) and the header (20) for selectively effecting a generally vertical movement of the header (20) relative to the frame (14), and

characterized in that:

the tilt means (50) are operable to tilt the header (20) with the rotary cutting means (25) thereon at the predetermined acute angle (A) inclined to the horizontal.

5. A harvesting machine according to claim 4, characterized in that:

the header (20) is provided with ground engaging means (41) proximate to each transversely opposite sidewall (21), and

the tilt means (50) are operably associated with the second side wall (21) and are positionable in two positions: a retracted position in which the ground engaging means (41) proximate to both sidewalls (21) of the header (20) are free to engage the ground (G), and a tilt position in which the tilt means (50) engage the ground (G) preventing the ground engaging means (41) proximate to the second sidewall (21) from engaging the ground (G).

6. A harvesting machine according to any of the preceding claims, characterized in that the tilt means (50) include a jackstand (55) operably associated with the support bar (40) proximate to the second transverse end thereof and selectively positionable in a retracted position and a tilt position to elevate the second end.

7. A harvesting machine according to the claim 6 when made dependent from claim 4 or 5, characterized in that:

the tilt means (50) include a bracket (52) affixed to the second header side wall (21), and

the jackstand (55) is generally vertically movably received within said bracket (52) and has a ground engaging foot and two vertically spaced apertures (56, 57) extending therethrough; each said aperture (56, 57) being alignable with an appropriate opening in the bracket (52) for a fastener (59) to be received through said opening and through any one of said apertures (56, 57) aligned therewith, and said jackstand apertures (56, 57) corresponding respectively to the positioning of the jackstand (55) in the tilt and retracted positions.

8. A harvesting machine according to claim 7 characterized in that the header lift means (29) are operable to lift the header (20) above the ground (G) to facilitate a positioning of the jackstand (55) in the tilt position before lowering the header (20) toward the ground (G) and effecting a positioning of said header (20) together with the support bar (40) thereon at the predetermined angle (A).

9. A harvesting machine according to claim 1 and also comprising:

a mobile frame (14),

crop processing means (30) for processing crop material fed thereto, and

a header (20) floatingly supported from the frame (14) for generally vertical movement relative thereto; the header (20) having first and second transversely spaced apart sidewalls (21), the rotary cutting means (25) being mounted on the header (20) forwardly of the crop processing means (30), and the lift means (29) operably interconnecting the frame (14) and the header (20) for selectively effecting a generally vertical movement of the header (20) relative to the frame (14), and

characterized in that:

the tilt means (50) are formed by a linkage which, when the header (20) is in a raised position, is selectively attachable between the frame (14) and the header (20) at a location proximate to the second sidewall (21) thereof and in a manner such that, when after attaching the linkage between the frame (14) and the header (20), said header (20) is lowered by appropriate manipulation of the header lift means (29), said linkage restricts the lowering movement of the second sidewall (21) of the header (20) thereby tilting the header (20) with the support bar (40) thereon at the predetermined angle (A) inclined to the horizontal.

10. A method of filling the proper volume of lubricant (L) in a harvesting machine (10) having a rotary cutting mechanism (25) including a hollow support bar (40) housing drive transmission means (45) and a desired volume of fluid lubricant (L) therewithin; the support bar (40) having a fill hole (48) for the introduction of lubricant (L) therein, characterized in the steps of:

raising the rotary cutting mechanism (25) from an operative position to an elevated position;

moving a tilting mechanism (50) disposed generally at or adjacent one transverse end of the rotary cutting mechanism (25) from an inoperative position to an operative tilt position for therewith restricting subsequent lowering movement of said one transverse end of the rotary cutting mechanism (25);

lowering the rotary cutting mechanism (25) until it is supported at said one transverse end thereof by the tilting mechanism (50) on the one hand and until the opposite transverse end thereof has returned substantially to the level of said operative position of the rotary cutting mechanism (25) on the other hand whereby said rotary cutting mechanism (25) assumes a tilted position at a predetermined acute angle (A) relative to the horizontal; the position of the fill hole (48) being such that the free volume of the support bar (40) below the fill hole (48) when the rotary cutting mechanism (25) is at said predetermined acute angle (A), is substantially equal to the desired volume of lubricant (L),

adjusting the amount of lubricant (L) within the support bar (40) until the level thereof is at the fill hole (48), and

then returning the rotary cutting mechanism (25) from the tilted position to the operative position.

11. A method of filling the proper volume of lubricant (L) in a harvesting machine (10) according to claim 10; the harvesting machine (10) having a header (20) provided with the rotary cutting mechanism (25) including the hollow support bar (40) and the method being characterized in that the steps of raising, lowering and returning the rotary cutting mechanism (25) are accomplished by respectively:

raising the header (20) from an operative position to an elevated position;

lowering the header (20) until it is supported generally at the one transverse end thereof corresponding to said one transverse end of the rotary cutting mechanism (25) by the tilting mechanism (50) on the one hand and until the opposite transverse end thereof has returned substantially to the level of said operative position of the header (20) on the other hand; and returning the header (20) from the tilted position to its operative position.

12. A method according to claim 10 or 11, characterized in that:

the moving step is accomplished by the moving of a jackstand (55) disposed on one side of the header (20) from a retracted position to a tilt position;

the lowering step is accomplished by the lowering of the header (20) until it is supported at opposing ends by the jackstand (55) and a ground engaging shoe (41) respectively; and

it further also comprises; before the lowering step, the step of positioning the header (20) over a substantially level area of ground (G) so that when the header (20) is supported at opposing ends by the jackstand (55) and the ground engaging shoe (41), respectively, the header (20) together with the rotary cutting mechanism (25) thereon are positioned at approximately the predetermined acute angle (A) relative to the horizontal.

13. A method according to claim 12, characterized in that the moving step includes the further steps of:

releasing a fastening member (59) holding the jackstand (55) in the retracted position with a bracket (52) connected to a sidewall (21) of the header (20),

dropping the jackstand (55) from the retracted position to the tilt position, and,

repositioning the fastening member (59) to hold the jackstand (55) in the tilt position.

14. A method according to claim 12 or 13, characterized in that the returning step includes the further steps of:

reraising the header (20) to the elevated position,

resecuring the jackstand (55) in the retracted position, and

relowering the header (20) to the operative position.

15. A method according to claim 11 characterized in that the step of moving the tilting mechanism (50) to the operative tilt position includes the attaching of a linkage between a frame portion (14) of the harvesting machine (10) and the header (20) at a location proximate to or generally at said one transverse end of the header (20) in a manner such that, during the subsequent header lowering step, said linkage restricts the lowering movement of said one transverse end of the header (20).

16. A method according to any of the claims 10 to 15, characterized in that the adjusting step includes the further steps of:

extracting a plug (49) from the fill hole (48),

extracting a plug (49) from an air hole (46) transversely spaced along the support bar (40) from the fill hole (48) between said fill hole (48) and the elevated end of the support bar (40),

adding a sufficient volume of lubricant (L) to bring the level of lubricant (L) to the fill hole (48), and

replacing the plugs (49) in both the fill hole (48) and the air hole (46).

**Patentansprüche**

1. Erntemaschine (10) mit rotierenden Schneideinrichtungen (25) und einer mit den rotierenden Schneideinrichtungen (25) betriebsmäßig verbundenen Hubeinrichtung (29) zum selektiven Bewegen der rotierenden Schneideinrichtungen (25) zwischen einer Betriebsstellung und einer Transportstellung, wobei die rotierenden Schneideinrichtungen (25) folgende Teile umfassen:

einen allgemein hohlen Tragbalken (40) mit einer Füllöffnung (48), die an einer vorgegebenen Entfernung von einem ersten Querende des Tragbalkens für das Einfüllen eines Schmiermittels (L) in diesen angeordnet ist,

Antriebsübertragungselemente (45), die in dem Tragbalken (40) angeordnet sind, und

eine Vielzahl von mit Querabstand angeordneten Mähkreiseln (28), die drehbar auf dem Tragbalken (40) befestigt und betriebsmäßig mit den darin angeordneten Antriebsübertragungsteilen (45) verbunden sind, um eine Drehung der Mähkreisel (28) zum Schneiden stehenden Erntematerials durch Aufprallwirkung hervorzurufen, dadurch gekennzeichnet,

daß betriebsmäßig mit dem Tragbalken (40) verbundene Neigungseinrichtungen (50) selektiv auf eine Ruhestellung und auf eine Neigungsstellung einstellbar sind, wobei die Anordnung derart ist, daß wenn die Erntemaschine (10) über einem im wesentlichen horizontalen Bodenbereich (G) angeordnet ist und die Hubeinrichtungen sich in dem Zustand befinden, der normalerweise der Betriebsstellung der rotierenden Schneideinrichtungen (25) entspricht und die Neigungseinrichtungen 50) in der Neigungsposition gehalten werden, das zweite Querende des Tragbalkens (40) höher angeordnet ist, als dessen erstes Querende, sodaß der Tragbalken (40) unter einem vorgegebenen spitzen Winkel (A) gegenüber der Horizontalen geneigt angeordnet ist, so daß der darin enthaltene Schmiermittelvorrat (L) zum unteren Querende strömt, und daß die Füllöffnung (48) derart angeordnet ist, daß der Pegel des Schmiermittels (L) an der Füllöffnung (48) liegt, wenn der Tragbalken (40) unter dem vorgegebenen spitzen Winkel (A) angeordnet ist und wenn die richtige Menge an Schmiermittel (L) in dem Tragbalken (40) enthalten ist.

2. Erntemaschine nach Anspruch 1, dadurch gekennzeichnet, daß der Tragbalken (40) mit Bodeneingriffsteilen (41) in der Nähe seines ersten Endes versehen ist, die auf dem Boden (G) aufruhen, wenn der Tragbalken (40) unter dem vorgegebenen spitzen Winkel (A) gegenüber der Horizontalen angeordnet ist.

3. Erntemaschine nach Anspruch 1 oder 2, dadurch gekennzeichnet, daß der Tragbalken (40) eine Entlüftungsöffnung (46) einschließt, die zwischen der Füllöffnung (48) und dem zweiten Querende des Tragbalkens (40) angeordnet ist, und daß die Füllöffnung (48) zum Einfüllen des Schmiermittels (L) in den Tragbalken (40) verwendet wird, während die Entlüftungsöffnung (46) dazu dient, den Austritt von Luft aus dem Tragbalken (40) zu ermöglichen, wenn Schmiermittel über die Füllöffnung (48) eingefüllt wird.

4. Erntemaschine nach einem der vorhergehenden Ansprüche die weiterhin folgende Teile umfaßt:

einen fahrbaren Rahmen (14),

Erntematerialverarbeitungseinrichtungen (30) zur Verarbeitung von diesen zugeführtem Erntematerial und

einen Erntevorsatz (20), der schwimmend an dem Rahmen (14) für eine allgemein vertikale Bewegung gegenüber diesem gehaltert ist, wobei der Erntevorsatz (20) erste und zweite mit Querabstand angeordnete Seitenwände (21) aufweist, wobei weiterhin die rotierenden Schneideinrichtungen (25) an dem Erntevorsatz (20) vor den Erntematerialverarbeitungseinrichtungen (30) angeordnet ist, und wobei die Hubeinrichtungen (29) den Rahmen (14) und den Erntevorsatz (20) betriebsmäßig für eine selektive Ausführung einer allgemein vertikalen Bewegung des Erntevorsatzes (20) relativ zu dem Rahmen (14) miteinander verbinden, dadurch gekennzeichnet, daß die Neigungseinrichtungen (50) zum Neigen des Erntevorsatzes (20) mit den daran befestigten rotierenden Schneideinrichtungen (25) mit einem vorgegebenen spitzen Winkel (A) gegenüber der Horizontalen geneigt betätigbar sind.

5. Erntemaschine nach Anspruch 4, dadurch gekennzeichnet, daß:

der Erntevorsatz (20) mit Bodeneingriffsteilen (41) benachbart zu jeder der in Querrichtung gegenüberliegenden Seitenwände (21) versehen ist, und

die Neigungseinrichtungen (50) betriebsmäßig der zweiten Seitenwand (21) zugeordnet sind und auf zwei Stellungen einstellbar sind, nämlich auf eine zurückgezogene Stellung, in der die Bodeneingriffsteile (41) benachbart zu beiden Seitenwänden (21) des Erntevorsatzes (20) mit dem Boden (G) in Eingriff kommen können, und auf eine Neigungsstellung, in der die Neigungseinrichtungen (50) mit dem Boden (G) in Eingriff kommen und verhindern, daß die der zweiten Seitenwand (21) benachbarten Bodeneingriffsteile (41) mit dem Boden (G) in Eingriff kommen.

6. Erntemaschine nach einem der vorhergehenden Ansprüche, dadurch gekennzeichnet, daß die Neigungseinrichtungen (50) einen Stützfuß (55) einschließen, der betriebsmäßig mit dem Tragbalken (40) in der Nähe von dessen zweiter Querende verbunden und selektiv auf eine zurückgezogene Stellung sowie auf eine Neigungsposition einstellbar iat, um das zweite Ende anzuheben.

7. Erntemaschine nach Anspruch 6 unter Rückbeziehung auf Anspruch 4 oder 5, dadurch gekennzeichnet, daß

die Neigungseinrichtungen (50) einen an der zweiten Erntevorsatz-Seitenwand (21) befestigten Haltearm (52) einschließen, und

der Stützfuß (55) allgemein in Vertikalrichtung beweglich in dem Haltearm (52) gehalten ist und einen mit dem Boden in Eingriff kommenden Fuß und zwei mit vertikalem Abstand angeordnete Öffnungen (56, 57) aufweist, die sich durch den Stützfuß (55) hindurch erstrecken, wobei jede dieser Öffnungen (56, 57) mit einer geeigneten Bohrung in dem Haltearm (52) ausrichtbar ist, damit ein Befestigungselement (59) von der Bohrung und einer damit ausgerichteten Öffnungen (56, 57) aufgenommen werden kann, und wobei die Öffnungen (56, 57) jeweils der Anordnung des Stützfußes (55) in der Neigungsstellung bzw. der zurückgezogenen Stellung entsprechen.

8. Erntemaschine nach Anspruch 7, dadurch gekennzeichnet, daß die Erntevorsatz-Hubeinrichtungen (29) so betätigbar sind, daß der Erntevorsatz (20) über den Boden (G) angehoben wird, um die Anordnung des Stützfußes (55) in der Neigungsstellung zu erleichtern, bevor der Erntevorsatz (20) auf den Boden (G) abgesenkt und die Anordnung des Erntevorsatzes (20) zusammen mit dem Tragbalken (40) unter dem vorgegebenen Winkel (A) bewirkt wird.

9. Erntemaschine nach Anspruch 1, mit

einem fahrbaren Rahmen (14),

Erntematerialverarbeitungseinrichtungen (30) zum Verarbeiten von diesen zugeführtem Erntematerial, und

einem Erntevorsatz (20), der schwimmend an dem Rahmen (14) für eine allgemein vertikale Bewegung gegeüber diesem gehaltert ist und der erste und zweite in Querrichtung mit Abstand angeordnete Seitenwände (21) aufweist, wobei die rotierenden Schneideinrichtungen (25) an dem Erntevorsatz (20) vor den Erntematerialverarbeitungseinrichtungen (30) befestigt sind, und wobei Hubeinrichtungen (29) den Rahmen (14) und den Erntevorsatz (20) betriebsmäßig miteinander verbinden, um selektiv eine allgemein vertikale Bewegung des Erntevorsatzes (20) gegenüber dem Rahmen (14) hervorzurufen,

dadurch gekennzeichnet,

daß die Neigungseinrichtungen (50) durch ein Gestänge gebildet sind, das, wenn sich der Erntevorsatz (20) in einer angehobenen Stellung befindet, selektiv zwischen dem Rahmen (14) und dem Erntevorsatz (20) an einer Stelle benachbart zu dessen zweiter Seitenwand (21) und in einer derartigen Weise anbringbar ist, daß wenn nach der Befestigung des Gestänges zwischen dem Rahmen (14) und dem Erntevorsatz (20) der Erntevorsatz (20) durch geeignete Betätigung der Erntevorsatz-Hubeinrichtungen (20) abgesenkt wird, das Gestänge die Absenkbewegung der zweiten Seitenwand (21) des Erntevorsatzes (20) begrenzt, wodurch der Erntevorsatz (20) mit dem daran angeordneten Tragbalken (40) auf den vorgegebenen, gegenüber der Horizontalen geneigten Winkel (A) geneigt wird.

10. Verfahren zum Einfüllen eines geeigneten Volumens eines Schmiermittels (L) in eine Erntemaschine (10), die einen rotierenden Schneidmechanismus (25) aufweist, der einen hohlen Tragbalken (40) aufweist, der Antriebsübertragungseinrichtungen (45) und ein gewünschtes Volumen eines flüssigen Schmiermittels (L) in sich aufnimmt, wobei der Tragbalken (40) eine Füllöffnung (48) für das Einfüllen von Schmiermittel (L) aufweist, gekennzeichnet durch die folgenden Schritte:

Anheben des rotierenden Schneidmechanismus (25) von einer Betriebsstellung auf eine angehobene Stellung;

Bewegen eines allgemein an oder benachbart zu einem Querende des rotierenden Schneidmechanismus (25) angeordneten Neigungsmechanismus (50) von einer Ruhestellung in eine Neigungs-Betriebsstellung, in der eine nachfolgende Absenkbewegung des einen Querendes des rotierenden Schneidmechanismus (25) eingeschränkt wird;

Absenken des rotierenden Schneidmechanismus (25) bis er einerseits an seinem einen Querende durch den Neigungsmechanismus (50) gehalten ist und andererseits das gegenüberliegende Querende im wesentlichen auf die Höhenlage der Betriebsstellung des rotierenden Schneidmechanismus (25) zurückgekehrt ist, sodaß der rotierende Schneidmechanismus (25) eine geneigte Stellung mit einem vorgegebenen spitzen Winkel (A) gegenüber der Horizontalen einnimmt, wobei die Position der Füllöffnung (48) derart ist, daß das freie Volumen des Tragbalkens (40) unterhalb der Füllöffnung (48) bei unter dem vorgegebenen spitzen Winkel (A) angeordnetem rotierendem Schneidmechanismus (25) im wesentlichen gleich dem gewünschten Volumen des Schmiermittels (A) ist,

Einstellen der Menge des Schmiermittels (L) in dem Tragbalken (40), bis dessen Pegel an der Füllöffnung (48) liegt, und

dann nachfolgendes Zurückführen des rotierenden Schneidmechanismus (25) von der geneigten Stellung in die Betriebsstellung.

11. Verfahren zum Einfüllen eines geeigneten Volumens von Schmiermittel (L) in einer Erntemaschine (10) gemäß Anspruch 10, wobei die Erntemaschine einen Erntevorsatz (20) aufweist, der mit dem rotierenden Schneidmechanismus (25) versehen ist, der einen hohlen Tragbalken (40) einschließt, und wobei das Verfahren dadurch gekennzeichnet ist, daß die Schritte des Anhebens, Absenkens und Zurückführens des rotierenden Schneidmechanismus (25) jeweils durch:

Anheben des Erntevorsatzes (20) von einer Betriebsstellung auf eine angehobene Stellung;

Absenken des Erntevorsatzes (20), bis er einerseits an dem einem Querende, das dem einen Querende des rotierenden Schneidmechanismus (25) entspricht, durch den Neigungsmechanismus (50) abgestützt ist, während das gegenüberliegende Querende im wesentlichen auf die Höhenlage der Betriebsstellung des Erntevorsatzes (20) zurückgekehrt ist, und

Rückführen des Erntvorsatzes (20) aus der geneigten Stellung in seine Betriebsstellung durchgeführt wird.

12. Verfahren nach Anspruch 10 oder 11, dadurch gekennzeichnet, daß:

der Schritt des Bewegens durch Bewegen eines Stützfußes (55), der an einer Seite des Erntevorsatzes (20) angeordnet ist, von einer zurückgezogenen Stellung in eine Neigungsstellung durchgeführt wird,

der Absenkschritt durch Absenken des Erntevorsatzes (20) durchgeführt wird, bis dieser an den gegenüberliegenden Enden durch den Stützfuß (55) bzw. einen mit dem Boden in Eingriff kommenden Gleitschuh (41) abgestützt ist, und

das Verfahren weiterhin vor dem Absenkschritt den Schritt des Anordnens des Erntevorsatzes (20) über einen im wesentlichen horizontalen Bodenbereich (G) umfaßt, so daß, wenn der Erntevorsatz (20) an seinen gegenüberliegenden Enden durch den Stützfuß (55) bzw. den mit dem Boden in Eingriff kommenden Gleitschuh (41) abgestützt ist, der Erntevorsatz (20) mit dem daran angeordneten rotierenden Schneidmechanismus (25) unter dem vorgegebenen spitzen Winkel (A) gegenüber der Horizontalen angeordnet ist.

13. Verfahren nach Anspruch 12, dadurch gekennzeichnet, daß der Schritt der Bewegung die folgenden weiteren Schritte einschließt:

Lösen eines Befestigungselementes (59), das den Stützfuß (55) in der zurückgezogenen Stellung in einem Haltearm (52) hält, der mit einer Seitenwand (21) des Erntevorsatzes (20) verbunden ist,

Absenken des Stützfußes (55) aus der zurückgezogenen Stellung in die Neigungsstellung, und

erneutes Anordnen des Befestigungselementes (59) zum Festhalten des Stützfußes (55) in der Neigungsstellung.

14. Verfahren nach Anspruch 12 oder 13, dadurch gekennzeichnet, daß der Schritt des Zurückführens die weiteren Schritte des

erneuten Anhebens des Erntevorsatzes auf die angehobene Stellung,

erneutes Festlegen des Stützfußes (55) in der zurückgezogenen Stellung,

erneutes Absenken des Erntevorsatzes in die Betriebsstellung einschließt.

15. Verfahren nach Anspruch 11, dadurch gekennzeichnet, daß der Schritt der Bewegung des Neigungsmechanismus (50) in die Neigungsbetriebsstellung die Befestigung eines Gestänges zwischen einem Rahmenteil (14) der Erntemaschine (10) und dem Erntevorsatz (20) an einer Stelle benachbart zu oder allgemein an dem einen Querende des Erntevorsatzes (20) in einer derartigen Weise einschließt, daß während des nachfolgenden Erntevorsatz-Absenkschrittes das Gestänge die Absenkbewegung des einen Querendes des Erntevorsatzes (20) begrenzt.

16. Verfahren nach einem der Ansprüche 10 bis 15, dadurch gekennzeichnet, daß der Schritt des Einstellens der Füllmenge die weiteren folgenden Schritte einschließt:

Entfernen eines Stopfens (49) aus der Füllöffnung (48), Entfernen eines Stopfens (49) aus einer Entlüftungsöffnung (46), die entlang des Tragbalkens (40) mit Querabstand von der Füllöffnung (48) zwischen der Füllöffnung (48) und dem angehobenen Ende des Tragbalkens (40) angeordnet ist,

Hinzufügen eines geeigneten Volumens des Schmiermittels (L), um den Pegel des Schmiermittels (L) auf die Füllöffnung (48) zu bringen, und

erneutes Anbringen der Stopfen (49) sowohl an der Füllöffnung (48) als auch der Entlüftungsöffnung (46).

**Revendications**

1. Récolteuse (10) équipée de moyens de coupe rotatifs (25) et de moyens de levage (29) associés d'une manière fonctionnelle aux moyens de coupe rotatifs (25), en vue de déplacer ces derniers sélectivement entre une position active et une position de transport; les moyens de coupe rotatifs (25) comportant:

une barre de support dans l'ensemble creuse (40) qui possède un trou de remplissage (48)

situé à une distance prédéterminée d'une première extrémité transversale de celle-ci, pour y introduire un lubrifiant (L),

des organes de transmission d'entraînement (45) logés à l'intérieur de la barre de support (40), et

plusieurs organes de coupe à disques espacés transversalement (28) qui sont montés rotatifs sur la barre de support (40) et reliés d'une manière fonctionnelle aux organes de transmission d'entraînement (45) prévus dans celle-ci pour faire tourner lesdits organes de coupe (28), afin de couper des produits de récolte sur pied sous l'effet d'un impact,

caractérisée en ce que:

des moyens d'inclinaison (50) associés d'une manière fonctionnelle à la barre de support (40) sont aptes à être positionnés sélectivement dans une position inactive et dans une position d'inclinaison; la conception étant telle que, lorsque la récolteuse (10) est placée audessus d'une surface de sol (G) sensiblement de niveau, les moyens de levage (29) sont dans un état qui correspond normalement à la position active des moyens de coupe rotatifs (25), tandis que les moyens d'inclinaison (50) sont maintenus dans la position d'inclinaison, la seconde extrémité transversale de la barre de support (40) étant située plus haut que la première extrémité transversale de celle-ci, moyennant quoi, ladite barre de support (40) est positionnée suivant un angle aigu (A) prédéterminé, incliné par rapport à l'horizontale, de sorte que la réserve de lubrifiant (L) contenue dans celle-ci est contrainte de s'écouler jusqu'à l'extrémité transversale inférieure, ledit trou de remplissage (48) étant placé de façon que le niveau de fluide du lubrifiant (L) atteigne le trou de remplissage (48), lorsque la barre de support (40) est positionnée suivant ledit angle aigu (A) prédéterminé et que le volume de lubrifiant (L) approprié est présent à l'intérieur de la barre de support (40).

2. Récolteuse selon la revendication 1, caractérisée en ce que la barre de support (40) est pourvue, à proximité de sa première extrémité, de moyens (41) de contact avec le sol destinés à reposer sur le sol (G), lorsque la barre de support (40) est positionnée suivant ledit angle aigu (A) prédéterminé par rapport à l'horizontale.

3. Récolteuse selon la revendication 1 ou 2, caractérisée en ce que la barre de support (40) comprend un trou d'aération (46) placé entre le trou de remplissage (48) et la seconde extrémité transversale de la barre de support (40); le trou de remplissage (48) servant à l'introduction du lubrifiant (L) dans la barre de support (40), tandis que le trou d'aération (46) sert à permettre à de l'air de s'échapper de la barre de support (40), lorsque le lubrifiant (L) est en train d'être introduit dans le trou de remplissage (48).

4. Récolteuse selon l'une quelconque des revendications précédentes et comportant également:

un châssis mobile (14),

des moyens de traitement de récolte (30) pour traiter des produits de récolte acheminés jusqu'à eux, et

un bec cueilleur (20) supporté d'une manière flottante depuis le châssis (14), en vue d'un déplacement dans l'ensemble vertical par rapport à celui-ci; le bec cueilleur (20) possédant des première et seconde parois latérales espacées transversalement l'une de l'autre (21), et les moyens de coupe rotatifs (25) étant montés sur le bec cueilleur (20), en avant des moyens de traitement de récolte (30), tandis que les moyens de levage (29) relient entre eux d'une manière fonctionnelle le châssis (14) et le bec cueilleur (20), en vue d'opérer sélectivement un déplacement dans l'ensemble vertical du bec cueilleur (20) par rapport au châssis (14), et

caractérisée en ce que:

les moyens d'inclinaison (50) sont aptes à opérer pour incliner le bec cueilleur (20) qui porte sur lui les moyens de coupe rotatifs (25), suivant l'angle aigu (A) prédéterminé, incliné par rapport à l'horizontale.

5. Récolteuse selon la revendication 4, caractérisée en ce que:

le bec cueilleur (20) est pourvu, à proximité de chacune des parois latérales opposées transversalement (21), de moyens (41) de contact avec le sol, et

les moyens d'inclinaison (50) sont associés d'une manière fonctionnelle à la seconde paroi latérale (21) et aptes à être placés dans deux positions, à savoir, une position rétractée dans laquelle les moyens (41) de contact avec le sol proches des deux parois latérales (21) du bec cueilleur (20) sont libres de venir en contact avec le sol (G), et une position d'inclinaison dans laquelle les moyens d'inclinaison (50) viennent en contact avec le sol (G), pour empêcher les moyens (41) de contact avec le sol proches de la seconde paroi latérale (21), de venir en contact avec ledit sol (G).

6. Récolteuse selon l'une quelconque des revendications précédentes, caractérisée en ce que les moyens d'inclinaison (50) comprennent une béquille à vérin (55) associée d'une manière fonctionnelle à la barre de support (40), à proximité de la seconde extrémité transversale de celle-ci, et apte à être placée sélectivement dans une position rétractée et dans une position d'inclinaison pour élever la seconde extrémité.

7. Récolteuse selon la revendication 6 lorsqu'elle est dépendante de la revendication 4 ou 5, caractérisée en ce que:

les moyens d'inclinaison (50) comprennent une console (52) fixée à la seconde paroi latérale de bec cueilleur (21), et

la béquille à vérin (55) est logée d'une manière mobile sensiblement verticalement à l'intérieur de ladite console (52) et possède un pied de contact avec le sol et deux orifices espacés verticalement (56, 57) qui la traversent; chacun desdits orifices (56, 57) étant apte à être aligné avec un trou approprié prévu dans la console (52), pour qu'un organe de fixation (59) puisse être logé dans ledit trou et dans l'un ou l'autre des deux orifices (56, 57) aligné avec celui-ci, lesdits orifices (56, 57) de la béquille à vérin (55) correspondant respectivement au positionnement de celle-ci dans les positions d'inclinaison et rétractée.

8. Récolteuse selon la revendication 7, caractérisée en ce que les moyens de levage de bec cueilleur (29) sont aptes à opérer pour lever le bec cueilleur (20) au-dessus du sol (G), afin de faciliter un positionnement de la béquille à vérin (55) dans la position d'inclinaison, avant d'abaisser le bec cueilleur (20) en direction du sol (G) et d'opérer un positionnement dudit bec cueilleur (20) ainsi que de la barre de support (40) montée sur celui-ci, suivant l'angle (A) prédéterminé.

9. Récolteuse selon la revendication 1 et comportant également:

un châssis mobile (14),

des moyens de traitement de récolte (30) pour traiter des produits de récolte acheminés jusqu'à eux, et

un bec cueilleur (20) supporté d'une manière flottante depuis le châssis (14), en vue d'un déplacement dans l'ensemble vertical par rapport à celui-ci; le bec cueilleur (20) possédant des première et seconde parois latérales espacées transversalement l'une de l'autre (21) et les moyens de coupe rotatifs (25) étant montés sur le bec cueilleur (20), en avant des moyens de traitement de récolte (30), tandis que les moyens de levage (29) relient entre eux d'une manière fonctionnelle le châssis (14) et le bec cueilleur (20), en vue d'opérer sélectivement un déplacement dans l'ensemble vertical du bec cueilleur (20) par rapport au châssis (14), et

caractérisée en ce que:

les moyens d'inclinaison (50) sont constitués par une tringlerie qui, lorsque le bec cueilleur (20) est dans une position levée, peut être fixée sélectivement entre le châssis (14) et le bec cueilleur (20), en un point proche de la seconde paroi latérale (21) de celui-ci et de telle manière que, lorsqu'une fois la tringlerie fixée entre le châssis (14) et le bec cueilleur (20), ledit bec cueilleur (20) est abaissé grâce à une manoeuvre appropriée des moyens de levage de bec cueilleur (29), ladite tringlerie limite le mouvement d'abaissement de la seconde paroi (21) du bec cueilleur (20), pour ainsi incliner le bec cueilleur (20) qui porte sur lui la barre de support (40), suivant l'angle (A) prédéterminé, incliné par rapport à l'horizontale.

10. Méthode de remplissage du volume de lubrifiant (L) approprié dans une récolteuse (10) équipée d'un mécanisme de coupe rotatif (10) comprenant une barre de support creuse (40) qui contient en elle des moyens de transmission d'entraînement (45) et un volume de lubrifiant fluide (L) voulu; la barre de support (40) possédant un trou de remplissage (48) pour y introduire le lubrifiant (L), caractérisée par les étapes qui consistent à:

lever le mécanisme de coupe rotatif (25) d'une position active dans une position surélevée;

déplacer un mécanisme d'inclinaison (50) disposé sensiblement au niveau ou à proximité d'une première extrémité transversale du mécanisme de coupe rotatif (25) d'une position inactive dans une position d'inclinaison active, pour ainsi limiter un mouvement d'abaissement consécutif de ladite première extrémité transversale du mécanisme de coupe rotatif (25);

abaisser le mécanisme de coupe rotatif (25) jusqu'à ce que, d'une part, il soit supporté, au niveau de sadite première extrémité transversale, par le mécanisme d'inclinaison (50) et que, d'autre part, sa seconde extrémité transversale opposée soit revenue sensiblement au niveau de ladite position active du mécanisme de coupe rotatif (25), pour qu'ainsi ledit mécanisme de coupe rotatif (25) adopte une position inclinée suivant un angle aigu (A) prédéterminé par rapport à l'horizontale; la position du trou de remplissage (48) étant telle que, lorsque le mécanisme de coupe rotatif (25) est disposé suivant ledit angle aigu (A) prédéterminé, le volume libre de la barre de support (40) au-dessous du trou de remplissage (48) est sensiblement égal au volume de lubrifiant (L) voulu,

ajuster la quantité de lubrifiant (L) à l'intérieur de la barre de support (40), jusqu'à ce que le niveau de celui-ci atteigne le trou de remplissage (48), et puis

ramener le mécanisme de coupe rotatif (25) de la position inclinée dans la position active.

11. Méthode de remplissage du volume de lubrifiant (L) approprié dans une récolteuse (10), selon la revendication 10; la récolteuse (10) possédant un bec cueilleur (20) muni du mécanisme de coupe rotatif (25) qui comprend la barre de support creuse (40), et la méthode étant caractérisée en ce que les étapes consistant à lever, à abaisser et à ramener le mécanisme de coupe rotatif (25) sont respectivement réalisées en

levant le bec cueilleur (20) d'une position active dans une position surélevée;

abaissant le bec cueilleur (20) jusqu'à ce que, d'une part, il soit, sensiblement au niveau de sadite première extrémité transversale correspondant à ladite première extrémité transversale du mécanisme de coupe rotatif (25), supporté par le mécanisme d'inclinaison (50) et que, d'autre part, sa seconde extrémité transversale opposée soit revenue sensiblement au niveau de ladite position active du bec cueilleur (20); et

ramenant le bec cueilleur (20) de la position inclinée dans sa position active.

12. Méthode selon la revendication 10 ou 11, caractérisée en ce que:

l'étape de déplacement est réalisée par le déplacement d'une béquille à vérin (55) disposée d'un côté du bec cueilleur (20), d'une position rétractée dans une position d'inclinaison;

l'étape d'abaissement est réalisée par l'abaissement du bec cueilleur (20) jusqu'à ce qu'il soit, au niveau d'extrémités opposées, supporté respectivement par la béquille à vérin (55) et un patin (41) de contact avec le sol; et en ce que

elle comporte en outre, avant l'étape d'abaissement, l'étape qui consiste à positionner le bec cueilleur (20) sur une surface de sol (G) sensiblement de niveau, de façon que, lorsque le bec cueilleur (20) est, au niveau d'extrémités opposées, supporté respectivement par la béquille à vérin (55) et le patin (41) de contact avec le sol, le bec cueilleur (20) ainsi que le mécanisme de coupe rotatif (25) monté sur lui, soient positionnés approximativement suivant l'angle aigu (A) prédéterminé par rapport à l'horizontale.

13. Méthode selon la revendication 12, caractérisée en ce que l'étape de déplacement comprend les étapes supplémentaires qui consistent à:

libérer un organe de fixation (59) qui retient la béquille à vérin (55) dans la position rétractée à l'aide d'une console (52) reliée à une paroi latérale (21) du bec cueilleur (20),

laisser tomber la béquille à vérin (55) de la position rétractée dans la position d'inclinaison, et,

repositionner l'organe de fixation (59) pour maintenir la béquille à vérin (55) dans la position d'inclinaison.

14. Méthode selon la revendication 12 ou 13, caractérisée en ce que l'étape de retour comprend les étapes supplémentaires qui consistent à:

lever à nouveau le bec cueilleur (20) dans la position surélevée,

réassujettir la béquille à vérin (55) dans la position rétractée, et

abaisser à nouveau le bec cueilleur (20) dans la position active.

15. Méthode selon la revendication 11, caractérisée en ce que l'étape de déplacement du mécanisme d'inclinaison (50) dans la position d'inclinaison active comporte l'étape qui consiste à fixer une tringlerie entre une partie formant châssis (14) de la récolteuse (10) et le bec cueilleur (20), en un point situé à proximité ou sensiblement au niveau de ladite première extrémité transversale du bec cueilleur (20), de telle manière que, pendant l'étape d'abaissement consécutive de ce dernier, ladite tringlerie limite le mouvement d'abaissement de ladite première extrémité transversale du bec cueilleur (20).

16. Méthode selon l'une quelconque des revendications 10 à 15, caractérisée en ce que l'étape d'ajustement comprend les étapes supplémentaires qui consistent à:

extraire un bouchon (49) du trou de remplissage (48),

extraire un bouchon (49) du trou d'aération (46) situé à une certaine distance du trou de remplissage (48) transversalement le long de la barre de support (40), entre ledit trou de remplissage (48) et l'extrémité surélevée de la barre de support (40),

ajouter une quantité de lubrifiant (L) suffisante pour amener le niveau du lubrifiant (L) jusqu'au trou de remplissage (48), et

replacer les bouchons (49) tant dans le trou de remplissage (48) que dans le trou d'aération (46).

Fig. 1

10

18

29

22

15

50

14

18

2

2

2

2

39

12

29

30

45

48

28

26

28

28

25

46

20

Fig. 2

Fig. 4

Fig. 5

Fig. 6

# Fig. 3

EP 0 155 724 B1